Europäisches Patentamt

(19) European Patent Office

Office européen des brevets

(11) Publication number: **0 142 339**
**B1**

(12) **EUROPEAN PATENT SPECIFICATION**

(45) Date of publication of patent specification: **26.04.89**

(21) Application number: **84307730.6**

(22) Date of filing: **08.11.84**

(51) Int. Cl.⁴: **A 01 N 1/02**

(54) **Method of and medium for storing blood platelets.**

(30) Priority: **09.11.83 US 550251**
**29.12.83 US 566709**

(43) Date of publication of application:
**22.05.85 Bulletin 85/21**

(45) Publication of the grant of the patent:
**26.04.89 Bulletin 89/17**

(84) Designated Contracting States:
**AT BE CH DE FR GB IT LI LU NL SE**

(56) References cited:
**US-A-2 786 014**
**US-A-3 735 005**
**US-A-4 152 208**
**US-A-4 390 619**

(73) Proprietor: **THOMAS JEFFERSON UNIVERSITY**
**11th and Walnut Streets**
**Philadelphia Pennsylvania19107 (US)**

(72) Inventor: **Murphy, Scott**
**225 Kent Rd.**
**Ardmore Pennsylvania (US)**

(74) Representative: **Baillie, Iain Cameron et al**
**c/o Ladas & Parry Isartorplatz 5**
**D-8000 München 2 (DE)**

Courier Press, Leamington Spa, England.

EP 0 142 339 B1

## Description

The present invention relates to methods and media for the storage of blood platelets, and more particularly to methods and media for storing those blood platelets from about 18°—30°C., preferably in the range of about 20°—24°C., and even more preferably at about 22°C.

Platelets are obtained as a by-product from whole blood donations and from plateletpheresis procedures. Typically, they are now stored in their own plasma within a plastic container whose walls are permeable to atmospheric gases. The plasma associated with these platlets normally contain all the ingredients of normal plasma, plus citrate, which is added as an anti-coagulant, and dextrose at 5 times the physiologic level. The increased dextrose is added for the benefit of red cells which require it during storage, and is generally accepted to be required for platelet storage as well.

In routine blood banking practice, donations of a unit of blood (450 ml into 67.5 anti-coagulant) are processed by centrifugation into three fractions — red cells, plasma, and platelets. The volume of packed red cells from a unit is approximately 180 ml with a remaining volume of plasma and anti-coagulant of about 337.5 ml. As used in the remainder of this application, the term "plasma" includes any anti-coagulant which has been added thereto at the time of its initial collection. The red cells (referred to as packed red cells) are typically suspended in approximately 47.5 ml of plasma. Platelets are suspended in approximately 50 ml of plasma. This platelet containing product is typically referred to as platelet concentrate. The remaining 240 ml of plasma is frozen as fresh frozen plasma.

Recent advances have allowed blood banks to store platelet concentrates at 22°C for five days. See Murphy et al., "Improved Storage of Platelets for Transfusion in a New Container", *Blood 60(1)*: 194—200 (1982); Simon et al, "Extension of Platelet Concentrate Storage", *Transfusion, 23(3)*: 207—212 (1983). The extended storage of platelets at 22°C. provides the flexibility to allow inventory planning so that platelets can be available at widely dispersed sites when needed. However, the above described storage procedure requires that platelets be suspended in 50 ml plasma which is then infused into the patient along with the platelets.

There are disadvantages to storing platelets in large volumes of plasma which are then infused into a recipient. Diseases may be transmitted by plasma infusion. It is certain that hepatitis-B and nonA, nonB-hepatitis may be transmitted by such plasma infusions. It is also likely that the newly-recognized acquired immunodeficiency syndrome (AIDS) may be transmitted through plasma infusion. Patients may also exhibit allergic reactions to plasma which are at least annoying, and occasionally fatal. Furthermore, plasma is valuable because it can be fractionated into its components such as albumin and coagulation factors for treatment of specific patients. A milliliter of plasma is worth 4—5 cents. Therefore, the plasma used to suspend platelets is worth as much as $2.50 per unit. Since 4 million units of platelets are administered yearly in the United States, the use of plasma as a storage medium for platelets may waste up to $10 million annually of plasma. Furthermore the use of platelets in the United States has been increasing as a general trend.

A great deal is known about human platelet cells. General papers describing techniques materials and methods for storage of blood platelets are described by Murphy et al in "Improved Storage of Platelets for Transfusion in a New Container", *Blood* 60(1), July, 1982; by Murphy in "The Preparation and Storage of Platelets for Transfusion", Mammon, Barnheart, Lusher and Walsh, PJD Publications Ltd., Westbury, New York (1980); by Murphy in "Platelet Transfusion", *Progress in Hemostasis and Thrombosis*, Vol. III, Edited by Theodore H. Spaet, Grune and Stratton, Inc. (1976); and by Murphy et al in "Platelet Storage at 22°C.: Role of Gas Transport Across Plastic Containers in Maintenance of Viability", *Blood 46(2)*: 209—218 (1975).

There are, of course, many culture media and/or physiologic solutions which are deemed acceptable for use in maintaining and/or culturing vertebrate cells. Such solutions include Earle's solution (a tissue culture medium); Fonio's solution (used for staining smears of blood platelets); Gey's solution (for culturing animal cells); Hank's solution (for culturing animal cells); Heyem's solution (a blood diluent used prior to counting red blood cells); Krebs-Ringer's solution (a modification of Ringer's solution prepared by mixing NaCl, KCl, CaCl$_3$, MgSO$_4$, and phosphate buffer, pH 7.4); lactated Ringer's solution (containing NaCl, sodium lactate, CaCl$_2$ dihydrate and KCl in distilled water); Locke's solution (for culturing animal cells; Locke-Ringer solution (containing NaCl, CaCl$_2$, KCl, MgCl$_2$, NaHCO$_3$, glucose and water); Ringer's solution (resembling blood serum and its salt constituents, containing 8.6 grams of NaCl, 0.3 gms of KCl and 0.33 gms of CaCl$_2$ in each thousand milliliters of distilled water, used topically for burns and wounds or used in combination with naturally occurring body substances, e.g., blood serum, tissue abstracts and/or more complex chemically defined nuclear solutions for culturing animal cells); and Tyrode's solution (a modified Locke's solution). See Stedman's Medical Dictionary, pp. 1300—1301, Williams and Wilkins, Baltimore, Maryland (1982).

The maintenance and/or culturing of live vertebrate cells creates different problems depending upon the particular type of cells employed. It is known, for example, that blood cells, such as platelets, have many metabolic properties similar to those of certain other types of cells. In *Blood 30*:151 (1967), for example, it is suggested that the metabolic properties of blood cells are similar in some respects to those of tumor cells. On the other hand, there exists a considerable body of prior art directed specifically to the problem of storing stable suspensions of blood cells, such as blood platelets. Prior work on the storage of blood platelets, has shown that the duration of platelet storage is limited by the continuing production of lactic acid from dextrose by the platelets. Although this provides energy for the platelets, the lactic acid acidifies the medium, which acidity eventually destroys the platelets. It has also been shown that platelets consume oxygen during storage for energy production, the end product of which process is a gas, $CO_2$, which, unlike lactic acid, can leave the container through the plastic walls in which it is normally stored. The production of $CO_2$ does not acidify the storage medium for these platelets. In addition to the glycolysis of dextrose, fatty acids and amino acids typically present in the plasma may be used as substrates for oxidative metabolism of stored platelet cells.

Various techniques are disclosed in the patent literature relating to the fractionation of blood into useful end products. In GB—A—1,283,273, a method and apparatus for separating plasma from whole blood to produce a plasma end product is disclosed wherein the remaining blood fractions are returned to a donor. In U.S.—A—4,269,718 (Persidsky) a method of centrifugal separation of platelets from blood using saline as a washing and displacing solution is disclosed. In Pradi, U.S.—A—4,387,031, a composition is disclosed for separating erythrocytes and plasma in blood.

The patent literature also discloses various preservative or culture media which are disclosed as being useful in conjunction with the storage of platelets. In U.S.—A—4,390,619 (Harmening-Pittiglio) an ionexchange resin for slow release for phosphate buffer is disclosed. This patent contains an extensive discussion of oxidative phosphorylation and glycolysis mechanisms of platelets, and the relationship thereof to platelet storage. In U.S.—A—2,786,014 (Tullis) and U.S. 3,629,071 (Sekhar) various glucose and electrolyte containing platelet storage media are disclosed which are intended for use in the storage of platelets at temperatures in the range of 4°—5°C. Similarily, U.S.—A—4,152,208 discloses a method and medium for storing stabilized leucocytes which are disclosed as being storable at temperatures from about 4°C to about 30°C, which are kept in a basic salt solution or a minimum essential medium which sustains the viability of the leucocytes in the blood. In U.S.—A—4,267,269 (Grode et al) a red cell storage solution is disclosed containing adenine, glucose or fructose, sodium chloride and mannitol. U.S.—A—3,814,687 (Ellis et al), U.S.—A—3,850,174 (Ayres) and the aforementioned GB—A—1,283,273 generally relate to the separation of formed elements from plasma in blood fractionation processes. In U.S.—A—4,152,208 (Guirgis) a variety of leucocyte preservative solutions and the use of such solutions in blood fractionation procedures is disclosed, including Eagles' MEM (columns 3 and 4) containing *inter alia*, glutamine, leucine, isoleucine, phenylalanine, tyrosine, phosphates and sodium and potassium chlorides, for use in conjunction with anti-coagulants such as sodium citrate. See also U.S.—A—4,205,126 (Cartaya). U.S.—A—3,753,357 (Schwartz) broadly discloses various preservative or culture media useful in conjunction with the storage of blood cells.

As discussed hereinafter, one of the preferred embodiments of the present invention utilizes a synthetic platelet storage medium to which glutamine has been added. Although not related to the storage or culturing of blood cells, the following publications do disclose that glutamine may be a substrate for oxidative phosphorylation in a certain type of cancer cells, namely, HeLa cells. See "The Continuous Growth of Vertebrate Cells in the Absence of Sugar" by Wice et al, *Journal of Biological Chemistry*, 256 (15):7812—7819 (1981); "The Pentose Cycle", by Reitzer et al, *Journal of Biological Chemistry, 255 (12)*: 5616—5626 (1980); and "Evidence that Glutamine, Not Sugar is the Major Energy Source for Cultured HeLa Cells", by Reitzer et al, *Journal of Biological Chemistry, 254 (8): 2669—2676 (1979)*. See also Kuchler, *Biochemical Methods and Cell Cutural and Virology*, Halstead Press at pages 83, 87—88, (1977).

Notwithstanding the considerable work conducted in this area, a need still exists for a simple safe, inexpensive method for storing human blood platelets in a viable condition while increasing the amount of blood plasma which is freed for other uses.

The present invention provides a novel method and storage medium for storing platelets in a viable condition for three to seven days, preferably at least about five days, at temperatures from about 18°—30°C, especially from about 20°—24°C and preferably at about 22°C. The methods of the present invention comprises the steps of providing a platelet rich suspension of platelets in blood plasma; extracting supernatant plasma from that suspension to leave between about 1 to 15 mls of plasma per unit of blood platelets with those platelets to produce a concentrated platelet button; adding a buffered, Ringers-type citrate solution to said concentrated platelet button; agitating the resultant solution to resuspend the platlets to provide a synthetic suspension of those platelets; and storing that synthetic suspension in an oxygen permeable container at about 22°C until needed for use. The preferred Ringer's-citrate solution is buffered to maintain the pH of a unit of platelets and not more than 15 mls of associated plasma at a pH in excess of 6.2 during seven days of storage with 60 ml per unit of this medium in an oxygen permeable container maintained at 22°C.

A preferred alternate blood platelent storage medium further comprises a platelet permeable non-glycolytic substrate for oxidative phosphorylation, such as glutamine. Alternative substrates include oxaloacetate, malate, fumarate, succinate, alpha-ketogluterate, oxalosuccinate, isocitrate, cis-aconitrate, and/or an amino acid which may be transformed to such citric acid cycle intermediates such as glutamic or aspartic acids.

Further alternate substrates include amino acids and fatty acids which give rise to acetyl-CoA, including leucine, isoleucine, phenylalanine, tyrosine, acetoacetic acid, acetone, and those fatty acids which may be metabolized by beta-oxidation. Particularly preferred at the present time is the addition of glutamine as a substrate for oxidative phosphorylation. It has been found that the addition of glutamine as a substrate for oxidative phosphorylation may extend the active metabolism of stored platelets to thereby extend their viability for as long as seven days.

Accordingly, a primary object of the present invention is the provision of a novel method of processing and storing human blood platelets.

A further object of the present invention is the provision of a novel platelet storage medium which will free substantial amounts of natural plasma for other uses.

These and further objects of the present invention will become apparent from the following more detailed description.

A primary object of the present invention is the provision of a disease free artificial storage medium for platelets which will permit storage for at least five days at a temperature of from about 18°—30°C., preferably at about 20°—24°C and most preferably at about 22°C. At the end of the storage, the platelets must be viable. By that it is meant that a majority of the stored platelets will circulate normally after infusion into a recipient. Several studies indicate that platelet viability is correlated to maintenance of normal platelet morphology. See Murphy et al, "Improved Storage of Platelets for Transfusion in a New Container", *Blood 60(1)*: 194—200 (1982); Kuniki et al, "A Study of Variables Affecting the Quality of Platelets Stored at 'Room Temperature'", *Transfusion, 15(5)*:414—421 (1975); and Holme et al, "Platelet Storage at 22°C.: Effect of Type of Agitation on Morphology, Viability, and Function in Vitro", *Blood 52(2)*: 425—435, (1978). As their name implies, platelets circulate as thin, compact disks with few processes. In most situations, loss of viability correlates with sphering, swelling and pseudopod formation. In the subsequently described experiments, platelet morphology has been used as an index of viability. This has been accomplished through the use of conventional phase microscopy. Additionally, the extent of platelet shape change in response to thrombin and the dispersion of size distribution by Coulter counter have been objectively measured. As reported in the above-mentioned Murphy et al and Holme et al papers, it has been shown that these measures correlate with microscopic morphology and *in vivo* viability.

In order to maintain viability, the cell must generate new adenosine triphosphate (ATP) continuously to meet its energy needs. Two pathways are normally available-glycolysis and oxidative phosphorylation. In glycolysis, one molecule of glycose is converted to two molecules of lactic acid to generate generation two molecules of ATP. In oxidation, glucose, fatty acid, or amino acid enters the citric acid cycle and is converted to carbon dioxide ($CO_2$) and water. This pathway requires the presence of an adequate supply of oxygen. It is a much more efficient system than glycolysis. For example, oxidative metabolism of glucose to $CO_2$ and water yields 36 molecules of ATP.

It has been recognized that blood platelets will meet their energy needs in a manner which is not necessarily consistent with their long-term storage in a viable condition. When given adequate oxygen, platelets produce most of their ATP through oxidation, but continue to produce lactic acid instead of diverting all metabolized glucose through the oxidative pathway. During the storage of platelets in plasma, lactic acid concentrations rise at approximately 2.5 millimolar per day. See Murphy et al, "Platelet Storage at 22°C.: Role of Gas Transport Across Plastic Containers in Maintenance of Viability", *Blood 46(2)*: 209—218 (1975). This leads to gradual fall in pH. As explained the aforementioned Murphy et al article, when lactic acid concentration rises above 20 millimolar, a pH (which started at 7.2) may reach 6.0. Since platelet viability is irreversibly lost of pH falls to 6.1 or below, a major limiting variable fo platelet storage is pH. See Murphy et al., "Storage of Platelet Concentrates at 22°C.", *Blood 35(4)*: 549—557 (1970). At this rate of lactic acid production, pH would fall much more rapidly if it were not for naturally occurring plasma buffers, principally sodium bicarbonate.

The present invention provides a method for processing and storing human blood platelets. This method includes the steps of providing a platelet concentrate comprising blood platelets in blood plasma (including any anti-coagulant added at a time of initial blood withdrawal); extracting supernatant plasma from said concentrate to leave about 1 to 15 (preferably 4 to 15) milliliters of plasma per unit of blood platelets to produce a platelet button and residual associated plasma; adding a buffered Ringers-citrate solution to said platelet button and associated residual plasma; agitating said solution to resuspend said platelets to provide a synthetic suspension of platelets; and storing said synthetic suspension in an oxygen permeable container at a temperature from about 18°—30°C, preferably from about 20°C—24°C until needed for use. The aforementioned buffered Ringers-citrate solution comprises from about 120—300, preferably from about 170—180 preferably about 175mM/L sodium; between about 0—10, preferably from about 2—5 and even more preferably about 3 mM/L potassium; between about 0—10, preferably from about 2—5 and even more preferably about 3.4 mM/L of calcium; from about 80—180, preferably about 110—125 and even more preferably about 117 mM/L chloride; from about 10—35, preferably from about 15—25 and even more preferably about 21 mM/L citrate; and a buffer which is effective to maintain the pH of a unit of platelets and not more than 15 mls of said associated plasma at a pH in excess of 6.2 during seven days of storage with 60 ml/unit of said medium in an oxygen permeable container maintained at the specified temperature such as the most preferred temperature 22°C. The preferred blood platelet storage medium thus contains sodium, potassium, calcium and chloride at physiologic levels, in addition to a concentration of citrate which is included to bind calcium which might otherwise initiate coagulation. It is not believed that this basic blood platelet storage medium provides an exogenous substrate for metabolism since it has been reported that citrate cannot enter the citric acid cycle of platelets. See Tegos et al, "Platelet Glycolysis in Platelet Storage. III. The Instability of Platelets to Utilize Exogenous Citrate",

*Transfusion 19(5)*: 601—603 (1979). Glucose has not been incorporated into the present medium since its incorporation would result in the obligatory production of lactic acid, leading to an unacceptable lowering of pH and a loss of platelet viability.

The preferred methods of the present invention are designed to limit the amount of glucose which is available to stored platelets, and which therefore may act as a substrate for lactic acid production. The amount of glucose-containing supernatant plasma removed from the platelet concentrate, and of glucose free storage medium added to the blood platelets and residual associated plasma ensure that the concentration of glucose in the resulting synthetic suspension is less than about 10 mM/L at the onset of storage. Preferably, the extraction and storage medium addition procedures are performed such that the concentration of glucose in the resulting suspension is about 5 mM/L at the onset of storage. As explained hereinafter, this concentration of glucose permits glycolysis to proceed until about a 1.5 mM concentration has been obtained, which occurs after about three days storage using the preferred methods and medium of the present invention.

In order to maintain the pH of the resultant synthetic suspension of platelets at an acceptable level, the aforementioned medium has also been formulated such that pH at the onset of storage is in excess of 7.0, preferably between about 7.2—7.4.

As mentioned above, the Ringer's-citrate solution maintains the pH of the suspension above 6.2 after 7 days of storage. This is preferably accomplished using a phosphate buffer, preferably sodium phosphate, which in solution has an $HPO_4$ concentration of between about 0—100 mM/L and preferably 8 mM/L. As demonstrated hereinafter, this buffering is sufficient to accommodate the lactic acid derived from metabolism of platelet glycogen as well as the residual plasma glucose not removed during concentrate preparation.

It is presently preferred to provide an additional platelet permeable, non-glycolytic substrate for oxidative phosphorylation to the synthetic platelet suspension prior to storage. Glutamine is the preferred non-glycolytic substrate for oxidative phosphorylation. In a preferred embodiment, glutamine may be incorporated as a component in the platelet storage medium in a concentration of between 5 to 25 preferably about 20 mM/L. Alternatively, other non-glycolytic substrates for oxidative phosphorylation may be selected from the group consisting of oxaloacetate, malate, fumarate, succinate, alpha-ketogluterate, oxalosuccinate, isocitrate, cis-aconitrate, glutamine, amino acid precursors of citric acid cycle intermediates, amino and/or fatty acids precursors of acetyl-CoA, and mixtures thereof. Such amino acid precursors of citric acid cycle intermediates include those selected from the group consisting of glutamic acid, aspartic acid, and mixtures thereof. Such precursors of acetyl-CoA may be selected from the group consisting of leucine, isoleucine, phenylalanine, tyrosine, acetoacetic acid, acetone, fatty acids metabolized by beta-oxidation and mixtures thereof.

It is also presently preferred to add magnesium to the subject storage medium since this element is important to proper cell function. When used, magnesium should be present between 0—3, preferably about 2.0 mM/L.

The present invention may be understood further from the following examples:

Platelet rich-plasma (PRP) and platelet concentrates (PC) were prepared from whole blood donations anti-coagulated with citrate-phosphate-dextrose (CPD) or acid-citrate-dextrose, as described in *Blood 52(2)*: 425—435, except that the supernatant plasma was extracted from the bag containing the platelet button as completely as possible using a Fenwal plasma extractor (Fenwal Laboratories, Deerfield, Ill.). The residual amount of plasma ranged from 4 to 15 ml. 45 ml of Ringer's solution (Travenol Laboratories, Inc., Deerfield, Ill.) and 15 ml of 2.5% citrate solution were added to the bag containing the platelet button. The bag was left undisturbed for 45 minutes before being placed on a platelet agitator (Helmer Labs., St. Paul, Minn.) for resuspension. It is preferred to perform such an incubation step for at least 30 minutes prior to agitating of the solution to resuspend the platelets. After two hours of agitation, the platelets were completely resuspended. The PC was then transferred to a PL/732 container (Fenwal, Inc.). This container is known to provide an adequate oxygen supply. See *Blood, 60(1)*: 194—200 (1982). Various supplements to be tested were then added to the container which was stored on the platelet agitator at 22°C. The final media were tested (concentrations indicated refer to final concentrations):

1. Ringers and citrate only: *Ri-Ci* (Sodium, 175 mM/L; potassium, 3 mM/L; calcium, 3.4 mM/L; chloride, 117 mM/L; citrate, 21 mM/L).

2. Ringers-citrate and phosphate: *Ri-Ci-Pho* ($HPO_4$, 8 m/L).

3. Ringers-citrate, phosphate and glutamine: *Ri-Ci-Pho-Glut* (L-glutamine) (GIBCO Labs, Grand Island, N.Y.), 20 mM).

4. Ringers-citrate, phosphate and glucose: *Ri-Ci-Pho-Gluc* (glucose, 25 mM).

5. Plasma control. Some PC were resuspended in plasma in the usual fashion for comparative purposes.

Platelet count, mean platelet volume, and the dispersion (geometric standard deviation) of the size distribution were determined using a Coulter counter.

$pO_2$ and pH were determined as previously described using a pH/blood gas analyzer. The oxygen consumption rate, $C(O_2)$, (nmoles/min/$10^9$ plts) was determined by a steady state technique:

$$C(O_2) = \frac{KO_2 \,(148\text{-}pO_2)}{\text{platelet content} \times 10^{-9}}$$

$KO_2$ is the capacity of the container for $O_2$ transport (nmoles/min/atm). The equation above states that the oxygen consumption of the platelets inside the container is equal to the flux of oxygen through the walls of the container.

Lactate and glucose concentrations were determined as previously described. (see *Blood 46(2)*: 209—218 (1975)). Extent of platelet shape change with thrombin (1U per ml final conc.) was measured using a Payton aggregometer. It was quantitated by the ratio of extinction $E_{1200}1/E_{1200}$, where $E_{1200}$ represents the extinction of the platelets before addition of thrombin and $E_{1200}1$ of the extinction after. See Holme et al, *Journal of Lab. and Clin. Medicine, 97(5)*:610—622 (1981).

3 ml. Samples of PC to be studied were taken at day 1, 3, 5 and 7. The final volumes of PC at day 7 ranged from 51—58 ml.

A decrease in pH levels below 6.2 was observed when platelets were stored in the basic Ringers-citrate medium, Ri-Ci. Addition of sodium phosphate, Ri-Ci-Pho, prevented most of this fall in pH. Addition of glutamine, Ri, Ci-Pho-Glut, did not alter the serial pH measurements observed with Ri-Ci-Pho. However, the buffering capacity of the phosphate was not sufficient to maintain pH if glucose was added in the medium, Ri-Ci-Pho-Gluc. The presence of glucose caused additional lactic acid accumulation overcoming the buffering capacity of Ri-Ci-Pho. These pH results are set forth in Table I:

### TABLE I, pH

| | Days of Storage | | | | |
|---|---|---|---|---|---|
| | **0** | **1** | **3** | **5** | **7** |
| 1. Ri-Ci (4)* | 6.77+0.04* | 6.65+0.08 | 6.37+0.09 | 6.16+0.29 | N.D. |
| 2. Ri-Ci-Pho (10) | 7.16+0.07 | 6.78+0.16 | 6.70+0.17 | 6.79+0.12 | 6.84+0.11 |
| 3. Ri-Ci-Pho-Glut (8) | 7.30+0.10 | 6.86+0.19 | 6.70+0.11 | 6.70+0.23 | 6.77+0.20 |
| 4. Ri-Ci-Pho-Gluc (1) | 7.26 | 6.96 | 6.42 | 6.16 | 5.90 |
| 5. Plasma (4) | 6.92+0.06 | 7.21+0.07 | 7.33+0.08 | 7.21+0.09 | 7.00+0.19 |

\* In this and other tables + refers to + 1. S.D. and the number of studies is in the parentheses.

The following table confirms that lactic acid production increased when glucose was added to the Ri-Ci solution:

### TABLE II, LACTATE (mM)

| | Days of Storage | | | | |
|---|---|---|---|---|---|
| | **0** | **1** | **3** | **5** | **7** |
| 1. Ri-Ci (4) | 0.9+0.7 | 1.7+0.6 | 3.9+0.9 | 6.5+3.6 | N.D. |
| 3. Ri-Ci-Pho-Glut (4) | 0.9+0.3 | 3.9+2.2 | 5.9+1.1 | 6.4+0.9 | 6.2+1.1 |
| 4. Ri-Ci-Pho-Gluc (1) | 1.0 | N.D. | 7.7 | 9.0 | N.D. |
| 5. Plasma (5) | 0.9+0.4 | 2.9+1.6 | 5.4+1.9 | 10.1+1.8 | N.D. |

Table III shows glucose concentrations under these storage conditions. It is apparent that glucose consumption and lactate production continue as long as glucose is present at the concentration above 1.5 mM. Such lactate production exceeds buffering capacity. In Ri-Ci-Pho-Glut, lactate production ceases on day 3 because substrate has been exhausted. These results also substantiate the fact that, if glucose is present, the rates of lactate production in artificial media and in plasma are similar.

TABLE III, GLUCOSE (mM)

| | Days of Storage | | | | |
|---|---|---|---|---|---|
| | 0 | 1 | 3 | 5 | 7 |
| 1. Ri-Ci (4) | 4.8+1.9 | 4.2+1.8 | 2.6+1.8 | 1.6+0.5 | N.D. |
| 3. Ri-Ci-Pho-Glut (4) | 5.0+0.6 | 3.5+1.7 | 1.5+0.2 | 1.5+0.2 | 1.4+0.2 |
| 4. Ri-Ci-Pho-Gluc (1) | 27.0 | N.D. | 22.0 | 19.8 | N.D. |
| 5. Plasma (5) | 21.7+1.1 | 21.1+1.6 | 18.6+1.6 | 17.8+1.6 | N.D. |

Table IV demonstrates that there was some decrease in oxygen consumption during storage. However, this decrease was not related to the absence of glucose of plasma in the medium since it also took place with platelets stored in plasma. The results in Ri-Ci-Pho-Glut firmly establish that oxygen consumption continues from day 3 to day 7 when glucose is not being consumed.

TABLE IV $C(O_2)$ (nmoles/min/$10^9$ plts)

| | Days of Storage | | | |
|---|---|---|---|---|
| | 1 | 3 | 5 | 7 |
| 1. Ri-Ci (4) | 1.55+0.41 | 1.01+0.22 | 0.87+0.23 | N.D. |
| 2. Ri-Ci-Pho (6) | 1.67+0.24 | 1.46+0.59 | 1.06+0.43 | 0.58+0.22 |
| 3. Ri-Ci-Pho-Glut (8) | 1.59+0.30 | 1.47+0.20 | 1.20+0.30 | 0.76+0.34 |
| 5. Plasma (4) | 2.00+0.34 | 1.47+0.59 | 1.13+0.08 | 0.91+0.08 |

The morphology of the platelets when stored in the Ringers-citrate medium with addition of phosphate and glutamine was well preserved at day 3 and 5. Some platelet clumping was apparent at day 5. This was reflected in a 10% decrease in platelet count at that time (Table V). This phenomenon progressed as storage continued beyond 5 days. A 10% fall in platelet count was also observed when platelets were stored in plasma.

TABLE V, PLATELET COUNT (% of Day 1 Value) (Coulter Counter)

| | Days of Storage | | | |
|---|---|---|---|---|
| | 1 | 3 | 5 | 7 |
| 1. Ri-Ci (4) | 100 | 95+5 | 89+3 | 85+14 |
| 2. Ri-Ci Pho (6) | 100 | 93+9 | 79+13 | 64+13 |
| 3. Ri-Ci-Pho-Glut (8) | 100 | 94+7 | 89+9 | 73+14 |
| 4. Plasma (4) | 100 | 95+3 | 90+4 | 91+7 |

Using phase microscopy it was apparent that platelets stored in the Ringers-citrate medium with phosphate and glutamine were mostly discoid and had intact internal structure at days 3 and 5. The percentage of swollen platelets with internal disintegration (balloon forms) was in the range, 5—10%, at 5 days of storage. These subjective impressions were reflected in objective measurements of the extents of platelet shape change (VI) and dispersion of Coulter size distribution (Table VII).

TABLE VI EXTENT OF SHAPE CHANGE, $(E_{1200}{}^1/E_{1200})$

| | Days of Storage | | | |
|---|---|---|---|---|
| | **1** | **3** | **5** | **7** |
| 1. Ri-Ci (4) | 1.21±0.05 | 1.11±0.03 | 1.04±0.05 | N.D. |
| 2. Ri-Ci-Pho (5) | 1.14±0.01 | 1.10±0.02 | 1.08±0.03 | 1.06±0.02 |
| 3. Ri-Ci-Pho-Glut (8) | 1.14±0.02 | 1.10±0.02 | 1.07±0.03 | 1.06±0.02 |
| 4. Plasma (4) | 1.21±0.07 | 1.10±0.03 | 1.13±0.05 | 1.09±0.03 |

TABLE VII SIZE DISPERSION (COULTER COUNTER)

| | Days of Storage | | | |
|---|---|---|---|---|
| | **1** | **3** | **5** | **7** |
| 1. Ri-Ci (4) | 1.83±0.08 | 1.92±0.15 | 2.05±0.46 | 2.18±0.25 |
| 2. Ri-Ci-Pho (6) | 1.81±0.04 | 1.82±0.08 | 2.02±0.19 | 2.15±0.16 |
| 3. Ri-Ci-Pho Glut (8) | 1.82±0.07 | 1.85±0.07 | 1.95±0.16 | 2.07±0.09 |
| 5. Plasma (4) | 1.81±0.04 | 1.85±0.09 | 1.87±0.08 | 1.98±0.08 |

In previous studies, the maintenance of *in vivo* viability has been observed when dispersion is below 2.0 and when extent of shape change is above 1.08. See *Blood 60(1)*: 194—200 and *Blood 52(2)*: 425—435. In the present experiments the dispersion measurements were below 2.0 and the extent of shape change measurements were close to 1.10 at days 3 and 5 when the platelets were stored in Ringers-citrate medium with phosphate and glutamine.

Certain of the above-identified experiments were repeated using a different batch of platelet buttons. The residual amounts of plasma in this group again ranged from 4 to 15 mls. During these tests it appeared that an error may have been made in calculating the concentration of phosphate used in the previous tests. As reported above, it is now believed that the above-described tests were conducted using 8 mM/L of phosphate (not the 50 mEq/L previously reported in the parent application).

The following tests were conducted as described above, except that each sample was observed either on the seventh or eighth day. As seen from the following data, these studies confirm the previous results. It should be noted that during this particular series of tests, the pH using a Ringers-citrate medium was not observed to fall below 6.2, but rather to about 6.5, and then to rise in subsequent observations. Nonetheless, these studies confirm the desirability of using an addition of phosphate to the Ringers-citrate solution to maintain the pH of the medium substantially above those values, and further confirm that the additions of glucose, with or without phosphate, fall to unacceptable low pH values.

## TABLE VIII, pH

### Days of Storage

| | 0 | 1 | 3 | 5 | 6 | 7 | 8 |
|---|---|---|---|---|---|---|---|
| Ri-Ci (4) | 6.94 ± 0.06 [4] | 6.69 ± 0.07 [4] | 6.51 + 0.06 [3] | 6.53 ± 0.05 [3] | 6.47 [1] | 6.73 ± 0.04 [2] | 6.66 ± 0.11 [2] |
| Ri-Ci-Pho (5) | 7.17 ± 0.11 [3] | 6.82 ± 0.04 [4] | 6.64 ± 0.11 [5] | 6.79 ± 0.08 [4] | 6.63 [1] | 6.91 ± 0.06 [4] | |
| Ri-Ci-Gluc (5) | 6.93 ± 0.05 [5] | 6.70 ± 0.06 [5] | 6.35 ± 0.08 [5] | 5.77 ± 0.14 [5] | | 5.61 ± 0.06 [5] | |
| Ri-Ci-Pho-Gluc (6) | 7.27 ± 0.05 [6] | 6.85 ± 0.07 [4] | 6.61 ± 0.12 [4] | 6.47 ± 0 [2] | 5.75 ± 0.24 [4] | 6.01 ± 0.12 [2] | 5.51 ± 0.08 [4] |

TABLE IX, LACTATE (mM)

Days of Storage

| | 0 | 1 | 3 | 5 | 6 | 7 | 8 |
|---|---|---|---|---|---|---|---|
| Ri-Ci (4) | 0.84 ± 0.27 [4] | 1.95 ± 0.51 [4] | 4.54 ± 1.22 [3] | 4.81 ± 0.22 [3] | | 3.84 ± 0.12 [3] | 4.28 [1] |
| Ri-Ci-Pho (5) | 1.29 ± 0.70 [3] | 3.09 ± 0.42 [3] | 5.94 ± 0.69 [4] | 5.27 ± 1.22 [4] | 1.15 [1] | 4.36 ± 1.55 [4] | |
| Ri-Ci-Gluc (5) | 0.92 ± 0.27 [5] | 2.54 ± 0.36 [5] | 6.30 ± 0.68 [5] | 13.65 ± 2.00 [5] | | 16.31 ± 1.03 [5] | |
| Ri-Ci-Pho-Gluc (6) | 1.15 ± 0.29 [6] | 3.32 ± 0.67 [4] | 7.16 ± 0.75 [4] | 10.18 ± 0.54 [2] | 17.64 ± 3.60 [4] | 15.97 ± 2.66 [2] | 20.20 ± 0.78 [4] |

EP 0 142 339 B1

EP 0 142 339 B1

### TABLE X – GLUCOSE (mM)

#### Days of Storage

| | 0 | 1 | 3 | 5 | 6 | 7 | 8 |
|---|---|---|---|---|---|---|---|
| Ri-Ci (4) | $2.82 \pm 0.35$ [4] | $2.42 \pm 0.37$ [4] | $0.51 \pm 0.55$ [3] | $0.04 \pm 0.07$ [3] | $0$ [1] | $0.07 \pm 0.10$ [2] | $0$ [2] |
| Ri-Ci-Pho (5) | $3.48 \pm 0.88$ [3] | $1.96 \pm 0.77$ [4] | $0.43 \pm 0.61$ [5] | $0.03 \pm 0.05$ [4] | $0.10$ [1] | $0.03 \pm 0.05$ [4] | |
| Ri-Ci-Gluc (5) | $23.04 \pm 1.15$ [5] | $22.60 \pm 0.98$ [5] | $20.27 \pm 1.27$ [5] | $16.46 \pm 1.34$ [5] | | $14.89 \pm 1.44$ [5] | |
| Ri-Ci-Pho-Gluc (6) | $22.10 \pm 1.43$ [6] | $20.98 \pm 1.64$ [4] | $18.85 \pm 1.28$ [4] | $18.07 \pm 0.60$ [2] | $13.11 \pm 2.48$ [4] | $15.07 \pm 0.17$ [2] | $11.24 \pm 1.50$ [4] |

EP 0 142 339 B1

TABLE XI - $C(O_2)$ (nmoles/min/$10^9$ plts)

**Days of Storage**

| | 0 | 1 | 3 | 5 | 6 | 7 | 8 |
|---|---|---|---|---|---|---|---|
| Ri-Ci (4) | | 0.99 ± 0.19 (4) | 0.88 + 0.23 (3) | 0.78 ± 0.19 (3) | 0.71 (1) | 0.62 ± 0.14 (2) | 0.62 ± 0.08 (2) |
| Ri-Ci-Pho (5) | | 1.01 ± 0.31 (4) | 0.83 ± 0.25 (5) | 0.85 ± 0.35 (4) | 0.47 (1) | 0.64 ± 0.19 (4) | |
| Ri-Ci-Gluc (5) | | 0.70 ± 0.13 (5) | 0.67 ± 0.27 (5) | 0.54 ± 0.24 (5) | | 0.11 ± 0.08 (5) | |
| Ri-Ci-Pho-Gluc (6) | | 0.78 ± 0.10 (4) | 0.66 ± 0.10 (4) | 0.67 ± 0.13 (2) | 0.19 ± 0.14 (4) | 0.47 ± 0.27 (2) | 0.02 ± 0.01 (4) |

EP 0 142 339 B1

### TABLE XII - PLATELET COUNT PER mm³

#### Days of Storage

| | 0 | 1 | 3 | 5 | 6 | 7 | 8 |
|---|---|---|---|---|---|---|---|
| Ri-Ci (4) | | 1,095,600.00 ±[4] 314,341.88 | 1,073,200.00 ±[3] 323,489.92 | 1,197,500.00 ±[3] 163,897.86 | 717,600 [1] | 1,047,400.00 ±[3] 119,254.18 | 717,600 [1] |
| Ri-Ci-Pho (5) | | 1,579,275.00 ±[4] 590,865.59 | 1,590,225.00 ±[4] 584,842.31 | 1,294,957.00 ±[4] 499,736.27 | 1,977,300.00 [1] | 1,156,800.00 ±[4] 377,997.38 | |
| Ri-Ci-Gluc (5) | | 1,452,180.00 ±[5] 269,785.80 | 1,460,400.00 ±[5] 270,425.58 | 1,432,080.00 ±[5] 293,690.70 | | 1,462,920.00 ±[5] 300,746.57 | |
| Ri-Ci-Pho-Gluc (6) | | 1,395,150 ±[4] 35,700.00 | 1,199,250.00 ±[4] 232,266.72 | 1,006,200.00 ±[2] 160,796.08 | 1,377,300.00 ±[4] 37,707.82 | 931,950.00 ±[2] 97,368.60 | 1,392,600.00 ±[4] 33,313.06 |

EP 0 142 339 B1

TABLE XIII - EXTENT OF SHAPE CHANGE (E 1200 [1]/E 1200)

Days of Storage

| | 0 | 1 | 3 | 5 | 6 | 7 | 8 |
|---|---|---|---|---|---|---|---|
| Ri-Ci (4) | | 1.10 ± 0.02 (4) | 1.10 ± 0.02 (3) | 1.07 ± 0.03 (3) | 1.04 (1) | 1.05 ± 0.03 (2) | 1.05 ± 0.01 (2) |
| Ri-Ci-Pho (5) | | 1.11 ± 0.04 (4) | 1.11 ± 0.03 (4) | 1.07 ± 0.02 (4) | 1.10 (1) | 1.06 ± 0.02 (4) | |
| Ri-Ci-Gluc (5) | | 1.11 ± 0.02 (5) | 1.11 ± 0.02 (5) | 1.03 ± 0.02 (5) | | 1.01 ± 0.01 (5) | |
| Ri-Ci-Pho-Gluc (6) | | 1.13 ± 0.03 (4) | 1.10 ± 0.03 (4) | 1.12 ± 0.03 (2) | 1.04 ± 0.04 (4) | 1.07 ± 0.01 (2) | 1.00 ± 0.01 (4) |

### TABLE XIV - SIZE DISPERSION (COULTER COUNTER)

| | 0 | 1 | 3 | 5 | 6 | 7 | 8 |
|---|---|---|---|---|---|---|---|
| Ri-Ci (4) | | $1.81 \pm 0.06$[4] | $1.78 + 0.09$[3] | $1.85 \pm 0.07$[3] | $1.83$[1] | $1.85 \pm 0.07$[2] | $1.96 \pm 0.06$[2] |
| Ri-Ci-Pho (5) | | $1.80 \pm 0.13$[4] | $1.76 \pm 0.11$[4] | $1.86 \pm 0.14$[4] | $1.79$[1] | $1.91 \pm 0.12$[4] | |
| Ri-Ci-Gluc (5) | | $1.79 \pm 0.03$[5] | $1.77 \pm 0.06$[5] | $1.95 \pm 0.13$[5] | | $2.37 \pm 0.30$[5] | |
| Ri-Ci-Pho-Gluc (6) | | $1.82 \pm 0.05$[4] | $1.85 \pm 0.06$[4] | $1.90 \pm 0.06$[2] | $2.06 \pm 0.22$[4] | $1.97 \pm 0.23$[2] | $2.36 \pm 0.25$[4] |

Days of Storage

It has thus been demonstrated that platelets can be stored for at least five days in artificial medium with maintenance of satisfactory pH, oxygen consumption, and morphology. These findings are consistent with in vivo viability and clinical efficacy as predicted through maintained morphology, see *Blood 60(1)*: 194—200; *Transfusion 15(5)*: 414—421 and *Blood 52(2)*: 425—435. The necessity of adding a buffer to the Ringer's-citrate medium to prevent fall in pH has been clearly demonstrated. Even in accordance with the methods of the present invention, there is always residual plasma in the concentrate. There is not sufficient buffering capacity in this residual plasma to prevent pH fall when the glucose in that plasma is converted to lactic acid, and the added citrate does not sufficiently add to the buffering capacity of the medium. Similarly, a phosphate addition is not sufficient to maintain pH if significant additions of glucose are made to the storage medium, since such additions will result in additional lactic acid production.

Glucose has therefore not been chosen as the primary substrate for platelet metabolism. Instead, the metabolic needs of each cells have been met by endogenous or exogenous amino acids or fatty acids which serve as a substrate for oxidative phosphorylation. Our findings suggest that human blood platelets may be maintained in the absence of sugar, just as Wice et al and others have shown that certain tissue culture cells, such as HeLa cells, can be grown with glutamine as a major energy source. See Wice et al, "The Continuous Growth of Vetebrate Cells in the Absence of Sugar", *Journal of Bioligical Chemistry, 256(15)*: 7812—7819 (1981); and Reitzer et al, "Evidence that Glutamine, Not Sugar, is the Major Energy Source for Cultured HeLa Cells", *Journal of Biological Chemistry, 254(8)*: 2669—2676 (1979).

As demonstrated above, platelets appear to be capable of sustaining oxidative metabolism even in the absence of sugar. After all glucose had been metabolized during the first three days of storage, platelets maintained morphology and continued oxygen consumption for an additional four days when glutamine was present to enter the citric acid cycle. It is also surprising that morphology and oxygen consumption were maintained to a considerable degree when glutamine was omitted from the Ringer's-citrate-phosphate medium. If the literature reports suggesting that citrate cannot be used as an exogenous substrate are accepted, it would appear that endigenous substrates were being used by the platelets during storage.

From the above it will be seen that several novel synthetic human blood platelet storage media may be used in a novel method for processing and storing human blood platelets in oxygen permeable containers at about 22°C. Use of these materials and methods should result in a substantial savings of natural plasma which is currently dedicated to the preservation of platelets during storage. It is further anticipated that the use of the herein described materials and methods will substantially reduce the likelihood that disease will be successfully transmitted through platelet transfusions.

## Claims

1. A method of processing and storing human blood platelets characterized by the steps of (a) providing a platelet concentrate comprising platelets in blood plasma, (b) extracting supernatant plasma from said concentrate to leave about 1 to 15 ml of plasma per unit of blood platelets to produce a platelet button and residual associated plasma, (c) adding a buffered Ringer's-citrate solution to said platelet button and associated residual plasma, (d) agitating said solution to resuspend said platelets to provide a synthetic suspension of platelets, and (e) storing said synthetic suspensions in an oxygen permeable container maintained at from about 20° to about 24°C until needed for use, whereby said platelets maintain their viability for at least between 3 and 7 days.

2. A method according to claim 1, characterized by adding a non-glycolytic substrate for oxidative phosphorylation to the suspension prior to storage.

3. A method according to claim 2, characterized in that said substrate is glutamine.

4. A method according to claim 1, characterized in that steps (b) and (c) are performed so as to ensure that the concentration of glucose in said synthetic suspension at the onset of storage is less than 10 mM/L.

5. A method according to claim 4, characterized in that steps (b) and (c) are performed such that the concentration of glucose in said suspension at the onset of storage is about 5 mM/L.

6. A method according to claim 1, characterized in that step (b) comprises leaving 4 to 15 ml of plasma per unit of blood platelets.

7. A synthetic human blood platelet storage medium characterized by 170 to 180 mM/L sodium, about 2 to 5 mM/L potassium; about 2 to 5 mM/L calcium; about 110—125 mM/L chloride; about 15—25 mM/L citrate; and a buffer which is effective to maintain the pH of a unit of platelets and not more than 15 mls of associated plasma at a pH in excess of 6.2 during seven days of storage with 60 mls per unit of said medium in an oxygen permeable container maintained at from about 20° to 24°C.

8. The synthetic human platelet storage medium according to claim 7, further characterized by a platelet permeable, non-glycolytic, substrate for oxidative phosphorylation.

9. The synthetic human platelet storage medium according to claim 8, characterized in that said non-glycolytic substrate is glutamine.

10. The medium of claim 7, further characterized by a non-glycolytic substrate for oxidative phosphorylation selected from oxaloacetate, malate, fumarate, oxalosuccinate, isocitrate, cis-aconitrate, glutamine, amino acid precursors of citric acid cycle intermediates amino and a fatty acid precursors of acetyl-CoA, and mixtures thereof.

# EP  0 142 339  B1

## Patentansprüche

1. Verfahren zum Verarbeiten und Lagern von Humanblutplättchen, gekennzeichnet, durch folgende Schritte: (a) es wird ein Blutplättchenkonzentrat verwendet, das Blutplättchen in Blutplasma enthält, (b) zum Erzeugen eines Blutplättchenknopfes und von zugeordnetem Restplasma wird obenschwimmendes Plasma von dem Konzentrat entfernt, so daß etwa 1 bis 15 ml Plasma pro Blutplättcheneinheit verbleiben, (c) zu dem Blutplättchenknopf und dem zugeordneten Restplasma wird eine gepufferte Ringersche Citratlösung zugesetzt, (d) zum Erzeugen einer synthetischen Blutplättchensuspension werden die Plättchen durch Bewegen der Lösung wieder suspendiert und (e) die synthetischen Suspensionen werden bis sie gebraucht werden, in einem sauerstoffdurchlässigen Behälter gelagert, der auf etwa 20 bis etwa 24°C gehalten wird, daß die Blutplättchen mindestens 3 bis 7 Tage lebensfähig bleiben.

2. Verfahren nach Anspruch 1, dadurch gekennzeichnet, daß der Suspension vor ihrer Lagerung zum oxidativen Phosphorylieren ein nichtglykolytisches Substrat zugesetzt wird.

3. Verfahren nach Anspruch 2, dadurch gekennzeichnet, daß das Substrat Glutamin ist.

4. Verfahren nach Anspruch 1, dadurch gekennzeichnet, daß die Schritte (b) und (c) derart durchgeführt werden, daß die Glucosekonzentration in der synthetischen Suspension zu Beginn der Lagerung niedriger ist als 10 mM/1.

5. Verfahren nach Anspruch 4, dadurch gekennzeichnet, daß die Glucosekonzentration in der Suspension zu Beginn der Lagerung ungefähr 5 mM/1 beträgt.

6. Verfahren nach Anspruch 1, dadurch gekennzeichnet, daß im Schritt (b) 4 bis 15 ml Plasma pro Blutplättcheneinheit belassen werden.

7. Synthetisches Medium zur Lagerung von Humanblutplättchen, gekennzeichnet durch 170 bis 180 mM Natrium; etwa 2 bis 5 mM Kalium; etwa 2 bis 5 mM Calcium; etwa 110 bis 125 mM Chlorid; etwa 15 bis 25 mM Citrat; und Puffer, der bei siebentägiger Lagerung mit 60 ml des Mediums pro Einheit in einem auf etwa 20 bis 24°C gehaltenen, sauerstoffdurchlässigen Behälter den pH-Wert einer Blutplättcheneinheit und nicht mehr als 15 ml zugeordnetem Plasma über 6,2 hält.

8. Synthetisches Medium zur Lagerung von Humanblutplättchen nach Anspruch 7, gekennzeichnet durch ein blutplättchendurchlässiges nichtglykolytisches Substrat zum oxidativen Phosphorylieren.

9. Synthetisches Medium zur Lagerung von Humanblutplättchen nach Anspruch 8, dadurch gekennzeichnet, daß das nichtglykolytische Substrat Glutamin ist.

10. Medium nach Anspruch 7, dadurch gekennzeichnet durch ein nichtglykolytisches Substrat zum oxidativen Phosphorylieren, das ausgewählt ist als Oxaloacetat, Malat, Fumarat, Oxalosuccinat, Isocitrat, cis-Aconitat, Glutamin, Aminosäurenvorstufen von Zwischenprodukten des Zitronensäurezyklus, Amino- und Fettsäure-Vorstufen von Acetyl-CoA und Gemischen derselben.

## Revendications

1. Un procédé pour la préparation et la conservation de plaquettes sanguines humaines caractérisé par les étapes:

(a) d'approvisionnement en un concentré de plaquettes comprenant des plaquettes dans du plasma sanguin;

(b) d'extraction du plasma surnageant dudit concentré pour conduire à environ 1 à 15 ml de plasma par unité de plaquettes sanguines pour produire une pastille de plaquette et un plasma résiduel associé;

(c) d'addition d'une solution de citrate-Ringers tamponnée à ladite pastille de plaquettes et au plasma résiduel associé;

(d) d'agitation de ladite solution pour remettre en suspension lesdites plaquettes de façon à obtenir une suspension synthétique de plaquettes et,

(e) de conservation desdites suspensions de plaquettes synthétiques dans un récipient perméable à l'oxygène, maintenu à une température d'environ 20 à 24°C jusqu'à ce qu'il soit nécessaire de les utiliser, lesdites plaquettes étant ainsi maintenues viables pour environ au moins 3 à 7 jours.

2. Un procédé selon la revendication 1, caractérisé par l'addition d'un substrat non glycolytique pour la phosphorylation oxydante de la suspension préalablement à la conservation.

3. Un procédé selon la revendication 2, caractérisé en ce que ledit substrat est la glutamine.

4. Un procédé selon la revendication 1, caractérisé en ce que les étapes (b) et (c) sont réalisées de façon à assurer, au début de la conservation, une concentration de glucose dans ladite suspension synthétique, inférieure à 10 mM/L.

5. Un procédé selon la revendication 4, caractérisé en ce que lesdites étapes (b) et (c) sont réalisées de telle sorte que la concentration de glucose dans ladite suspension au début de la conservation soit d'environ 5 mM/L.

6. Un procédé selon la revendication 1, caractérisé en ce que l'étape (b) conduit à 4 à 15 ml de plasma par unité de plaquettes sanguines.

7. Un milieu de conservation de plaquetes sanguines humaines synthétique caractérisé en ce qu'il comprend 170 à 180 mM/L de sodium, environ 2 à 5 mM/L de potassium, environ 2 à 5 mM/L de calcium environ 110—125 mM/L de chlorures, environ 15 à 25 mM/L de citrate et un tampon efficace pour maintenir le pH d'une unité de plaquettes et au plus de 15 ml de plasma associé à une valeur de pH supérieure à 6,2 durant 7 hours de conservation avec 60 ml par unité dudit milieu dans un récipient perméable à l'oxygène maintenu entre environ 20 et 24°C.

8. Le milieu de conservation de plaquettes humaines synthétique selon la revendication 7, caractérisé en ce qu'il comprend en outre un substrat non glycolytique perméable au plaquette pour la phosphorylation oxydante.

9. Le milieu de conservation de plaquettes humaines synthétique selon la revendication 8, caractérisé en ce que ledit substrat non glycolytique est la glutamine.

10. Le milieu selon la revendication 7, caractérisé en ce qu'il comprend un outre un substrat non glycolytique pour la phosphorylation oxydante sélectionné parmi l'oxaloacétate, le malate, le fumarate, l'oxalosuccinate, l'isocitrate, le cis-aconitate, le glutamine, des acides aminés précurseurs d'intermédiaires aminés du cycle de l'acide citrique et un acide gras précurseur de l'acétyle-CoA, et des mélanges de ceux-ci.